# EUROPEAN PATENT APPLICATION

(11) **EP 4 465 690 A1**
(43) Date of publication of application: **20.11.2024**
(21) Application number: 23739929.0
(22) Date of filing: 06.01.2023
(51) Int. Cl.: H04W 28/26

(54) **RESOURCE SELECTION METHOD AND APPARATUS, AND DEVICE**

(30) Priority: 13.01.2022 CN 202210039378
(71) Applicant: Spreadtrum Communications (Shanghai) Co., Ltd., Shanghai 201203 (CN)
(72) Inventor: CHEN, Mimi, Shanghai 201203 (CN); ZHANG, Meng, Shanghai 201203 (CN)
(74) Representative: Ipside
(86) International application number: PCT/CN2023/071089
(87) International publication number: WO 2023/134586

(57) **Abstract**

Embodiments of the present application provide a resource selection method, apparatus, and device. The method includes: according to a first moment corresponding to target data to be transmitted, a first terminal device determines a resource selection window and a resource perception window corresponding to the first moment, the resource perception window being located before the resource selection window; and the first terminal device excludes, from an available resource set corresponding to the resource selection window, at least a reserved resource corresponding to a second terminal device, to obtain a candidate resource set that can be used for transmitting the target data, wherein the second terminal device transmits first data on a first resource in the resource perception window, the first terminal device supports a first network standard, and the second terminal device supports a second network standard. By means of the above process, terminal devices of different network standards may share a resource pool, or resource pools of two terminal devices may overlap with each other in a frequency domain, thereby improving resource utilization rate.

## Description

This application claims priority to Chinese Patent Application No. 202210039378.7, filed to the China National Intellectual Property Administration on January 13, 2022 and entitled "RESOURCE SELECTION METHOD, APPARATUS, AND DEVICE", which is incorporated herein by reference in its entirety.

### TECHNICAL FIELD

The present application relates to the technical field of wireless communications and, in particular, to a resource selection method, apparatus, and device.

### BACKGROUND

A vehicle to everything technology based on a cellular mobile communication system (cellular vehicle to everything, C-V2X) may enable communication of vehicles with surrounding people, vehicles, roadside facilities, etc., for example, the C-V2X may include a long term evolution vehicle to everything (long term evolution vehicle to everything, LTE V2X) technology and a new radio vehicle to everything (new radio vehicle to everything, NR V2X) technology.

Both the LTE V2X and the NR V2X support an autonomous selection resource mode in sidelink (sidelink, SL). In the autonomous selection resource mode, a resource pool can be configured for a terminal device (user equipment, UE) in advance, and the terminal device can autonomously select a resource in the resource pool for data transmission. In the related art, for an LTE terminal device and an NR terminal device, resource pools need to be configured, respectively, and there is no overlap between the resource pools of them, so as to avoid resource collision between the LTE terminal device and the NR terminal device.

However, the above approach results in lower resource utilization rate.

### SUMMARY

The present application provides a resource selection method, apparatus, and device, and improves resource utilization rate.

In a first aspect, the present application provides a resource selection method, including:
according to a first moment corresponding to target data to be transmitted, determining, by a first terminal device, a resource selection window and a resource perception window corresponding to the first moment, the resource perception window being located before the resource selection window; and
excluding, by the first terminal device, from an available resource set corresponding to the resource selection window, at least a reserved resource corresponding to a second terminal device, to obtain a candidate resource set that can be used for transmitting the target data, where the second terminal device transmits first data on a first resource in the resource perception window, the first terminal device supports a first network standard, and the second terminal device supports a second network standard.

In a possible implementation, the excluding, by the first terminal device, from the available resource set corresponding to the resource selection window, the reserved resource corresponding to the second terminal device includes:
acquiring, by the first terminal device, sidelink control information corresponding to the first data, the sidelink control information including: resource indication information and reservation period information; where the resource indication information is used for indicating a resource occupied by a first data transmission, and the reservation period information is used for indicating a reservation period of the resource occupied by the first data transmission;
determining, by the first terminal device, the reserved resource corresponding to the second terminal device in the resource selection window according to the resource indication information and the reservation period information; and
excluding, by the first terminal device, from the available resource set corresponding to the resource selection window, the reserved resource corresponding to the second terminal device.

In a possible implementation, the excluding, by the first terminal device, from the available resource set corresponding to the resource selection window, the reserved resource corresponding to the second terminal device includes:
acquiring, by the first terminal device, reference signal receiving power corresponding to the first resource; and
if the reference signal receiving power is greater than or equal to a first threshold, excluding, by the first terminal device, from an available resource set corresponding to the resource selection window, the reserved resource corresponding to the second terminal device.

In a possible implementation, the sidelink control information further includes: a priority of the second terminal device;
the first threshold is related to a priority of the first terminal device and the priority of the second terminal device.

In a possible implementation, the first threshold is a pre-set threshold configured by a network device to the first terminal device.

In a possible implementation, the first terminal device includes a first communication module and a second communication module, and the first communication module supports the first network standard and the second communication module supports the second network standard.

In a possible implementation, the excluding, by the first terminal device, from the available resource set corresponding to the resource selection window, the reserved resource corresponding to the second terminal device comprises:
generating, by the first terminal device, a first resource set via the second communication module, where the first resource set is used for indicating resources available for the first communication module in the resource selection window, or indicating resources unavailable for the first communication module in the resource selection window;
transmitting, by the first terminal device, the first resource set to the first communication module via the second communication module; and
excluding, by the first terminal device, from the available resource set corresponding to the resource selection window, the reserved resource corresponding to the second terminal device, according to the first resource set via the first communication module.

In a possible implementation, the first resource set is used for indicating the resources available for the first communication module in the resource selection window; and the excluding, by the first terminal device, from the available resource set corresponding to the resource selection window, the reserved resource corresponding to the second terminal device, according to the first resource set via the first communication module, including:
determining, by the first terminal device, a resource set to be excluded according to the available resource set and the first resource set, where a resource in the resource set to be excluded belongs to the available resource set and does not belong to the first resource set; and
excluding, by the first terminal device, resources in the resource set to be excluded from the available resource set.

In a possible implementation, the first resource set is used for indicating resources unavailable for the first communication module in the resource selection window; and the excluding, by the first terminal device, from the available resource set corresponding to the resource selection window, the reserved resource corresponding to the second terminal device, according to the first resource set via the first communication module, including:
determining, by the first terminal device, a resource set to be excluded according to the available resource set and the first resource set, where a resource in the resource set to be excluded belongs to the available resource set and the first resource set; and
excluding, by the first terminal device, resources in the resource set to be excluded from the available resource set.

In a possible implementation, the first resource set includes: a reserved resource corresponding to the second terminal device in the resource selection window, or an idle resource other than the reserved resource corresponding to the second terminal device in the resource selection window.

In a possible implementation, the excluding, by the first terminal device, from the available resource set corresponding to the resource selection window, the reserved resource corresponding to the second terminal device includes:
acquiring, by the first terminal device, sidelink control information corresponding to the first data via the second communication module, the sidelink control information including: resource indication information and reservation period information; where the resource indication information is used for indicating a resource occupied by a first data transmission, and the reservation period information is used for indicating a reservation period of the resource occupied by the first data transmission;
transmitting, by the first terminal device, the sidelink control information to the first communication module via the second communication module;
determining, by the first terminal device, a reserved resource corresponding to the second terminal device in the resource selection window, according to the resource indication information and the reservation period information via the first communication module; and
excluding, by the first terminal device, from an available resource set corresponding to the resource selection window, the reserved resource corresponding to the second terminal device via the first communication module.

In a possible implementation, the method further includes:
transmitting, by the first terminal device, auxiliary information to the second communication module via the first communication module; where the auxiliary information includes one or more of: a priority of the first terminal device, a resource reservation period corresponding to the target data, a position of the resource selection window, and a resource size corresponding to the target data.

In a possible implementation, the first network standard is new radio (NR) and the second network standard is long term evolution (LTE).

In a second aspect, an embodiment of the present application provides a resource selection apparatus applied to a first terminal device, where the apparatus includes: a determination module and a processing module, where
the determination module is configured to determine, according to a first moment corresponding to target data to be transmitted, a resource selection window and a resource perception window corresponding to the first moment, the resource perception window being located before the resource selection window; and
the processing module is configured to exclude, from an available resource set corresponding to the resource selection window, at least a reserved resource corresponding to a second terminal device, so as to obtain a candidate resource set that can be used for transmitting the target data, where the second terminal device transmits first data on a first resource in the resource perception window, the first terminal device supports a first network standard, and the second terminal device supports a second network standard.

In a third aspect, an embodiment of the present application provides a resource selection device including: a processor and a memory;
the memory stores computer-executed instructions; and
the processor executes the computer-executed instructions stored in the memory to cause the processor to perform the resource selection method according to any one of the first aspect.

In a fourth aspect, an embodiment of the present application provides a computer-readable storage medium storing computer-executable instructions which, when executed by a processor, implement the resource selection method according to any one of the first aspect.

In a fifth aspect, an embodiment of the present application provides a computer program product including a computer program which, when executed by a processor, implements the resource selection method according to any one of the first aspect.

Embodiments of the present application provide the resource selection method, apparatus, and device. Where according to a first moment corresponding to target data to be transmitted, a first terminal device determines a resource selection window and a resource perception window corresponding to the first moment; and the first terminal device excludes, from an available resource set corresponding to the resource selection window, at least a reserved resource corresponding to a second terminal device, to obtain a candidate resource set that can be used for transmitting the target data, where the first terminal device supports a first network standard, and the second terminal device supports a second network standard. In the above-mentioned process, when the first terminal device performs resource selection, a reserved resource corresponding to a second terminal device can be excluded, so that the first terminal device and the second terminal device can share a resource pool, or the resource pool of the second terminal device overlaps the resource pool of the first terminal device in the frequency domain, thereby enabling the resource pool to be fully utilized and further improving the resource utilization rate.

### BRIEF DESCRIPTION OF DRAWINGS

FIG. 1 is a schematic diagram of an architecture of a communication system according to an embodiment of the present application.
FIG. 2 is a schematic diagram of NR V2X autonomous resource selection.
FIG. 3 is a flowchart of a resource selection method according to an embodiment of the present application.
FIG. 4 is a flowchart of another resource selection method according to an embodiment of the present application.
FIG. 5 is a flowchart of yet another resource selection method according to an embodiment of the present application.
FIG. 6 is a flowchart of yet still another resource selection method according to an embodiment of the present application.
FIG. 7 is a schematic structural diagram of a resource selection apparatus according to an embodiment of the present application.
FIG. 8 is a schematic structural diagram of a resource selection device according to an embodiment of the present application.

### DESCRIPTION OF EMBODIMENTS

Technical solutions in the embodiments of the present invention will be clearly and completely described in conjunction with the accompanying drawings of the embodiments of the present inventions. Obviously, the described embodiments are merely a part of the embodiments of the present invention, but not all of the embodiments. Based on the embodiments of the present invention, all other embodiments obtained by those of ordinary skill in the art without paying any creative effort will fall within the protection scope of the present invention.

Terms "first", "second", "third", and "fourth", if any, in the description and claims as well as the above-mentioned accompanying drawings of the present invention are used for distinguishing between similar objects and not necessarily for describing a particular sequence or chronological order. It is to be understood that the data so used are interchangeable under appropriate circumstances, such that the embodiments of the present invention described herein are capable of being implemented for example in sequences other than those illustrated or otherwise described herein. Furthermore, the terms "includes" and "including", as well as any variations thereof, are intended to cover a non-exclusive inclusion, for example, a process, a method, a system, a product, or a device that includes a list of steps or elements is not necessarily limited to those steps or elements expressly listed, but may include other steps or elements not expressly listed or inherent to such process, method, product, or device.

The technical solutions provided by the embodiments of the present application can be applied to various communication systems, for example, a long term evolution (long term evolution, LTE) system, an advanced long term evolution

(advanced long term evolution, LTE-A) system, a new radio (new radio, NR) system, an evolution systems of the NR system, an LTE-based access to unlicensed spectrum (LTE-based access to unlicensed spectrum, LTE-U) system, a NR-based access to unlicensed spectrum (NR-based access to unlicensed spectrum, NR-U) system, a non-terrestrial networks (Non-Terrestrial Networks, NTN) system, an universal mobile telecommunication system (universal mobile telecommunication system, UMTS), wireless local area networks (wireless local area networks, WLAN), wireless fidelity (wireless fidelity, WiFi), the 5th-generation (5th-generation, 5G) system or other communication systems, etc.

In embodiments of the present application, a terminal device typically has wireless transceiving functionality and may also be referred to as user equipment (user equipment, UE), an access terminal, a user unit, a user station, a mobile radio station, a mobile station, a remote station, a remote terminal, a mobile device, a user terminal, a terminal, a wireless communication device, a user agent or a terminal apparatus, etc. The terminal device may be a station (station, ST) in a WLAN, and may be a cellular phone, a cordless phone, a session initiation protocol (session initiation protocol, SIP) phone, a wireless local loop (wireless local loop, WLL) station, a personal digital processing (personal digital assistant, PDA) device, a hand-held device having a wireless communication function, a computing device or other processing devices connected to a wireless modem, an onboard device, a wearable device, and a next generation communication system, for example, a terminal device in an NR network or a terminal device in a public land mobile network (public land mobile network, PLMN) network of the future evolution, etc. The terminal device can be a mobile phone (mobile phone), a Pad (Pad), a computer with a wireless transceiving function, a virtual reality (virtual reality, VR) terminal device, an augmented reality (augmented reality, AR) terminal device, a wireless terminal in industrial control (industrial control), an onboard terminal device and a wireless terminal in self driving (self driving); a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), a wearable terminal device, etc. The terminal device to which embodiments of the present application relate may also be referred to as a terminal, user equipment (user equipment, UE), an access terminal device, an onboard terminal, an industrial control terminal, a UE unit, a UE station, a mobile station, a mobile radio station, a remote station, a remote terminal device, a mobile device, a UE terminal device, a wireless communication device, a UE proxy, or a UE apparatus, etc. The terminal device may also be fixed or mobile.

In an embodiment of the present application, the network device may be a device for communicating with a mobile device. The network device may be a node in a wireless access network, which may also be referred to as a base station, which may also be referred to as a radio access network (radio access network, RAN) node (or device). The network device may be operable to interconvert received air frames with Internet Protocol (IP) packets as a router between the terminal device and the rest of the access network, where the rest of the access network may include an IP network. The network device may also coordinate attribute management for the air interface. For example, the network device may include an evolved base station (NodeB or eNB or e-NodeB, evolutional Node B) in a long term evolution (LTE) system or an LTE-Advanced system (LTE-A), or may also include a next generation node B (next generation node B, gNB) in the 5th generation (5th generation, 5G) new radio (new radio, NR) system, or may further include a transmission reception point (transmission reception point, TRP), a home base station (e.g. home evolved NodeB, or home Node B, HNB), a base band unit (base band unit, BBU), or a WiFi access point (access point, AP), etc. Additionally or alternatively, a centralized unit (centralized unit, CU) and a distributed unit (distributed unit, DU) in a cloud access network (cloud radio access network, cloud RAN) system may be included. The network device may also be a network device in a future evolution PLMN network or the like.

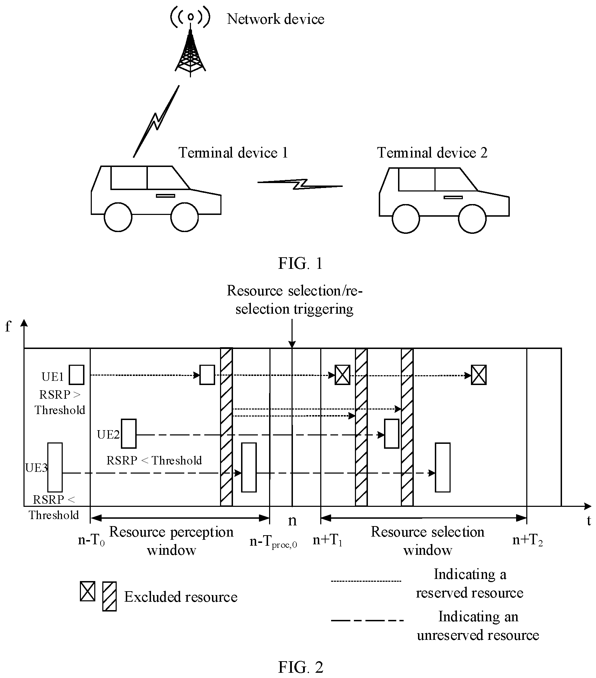

To facilitate understanding, an architecture of a communication system according to an embodiment of the present application will be firstly described with reference to FIG. 1.

FIG. 1 is a schematic diagram of an architecture of a communication system according to an embodiment of the present application. As shown in FIG. 1, the communication system includes: a network device and a plurality of terminal devices, for example, a terminal device 1 and a terminal device 2.

It should be understood that communication between the terminal device and the network device may occur, and that communication between the terminal devices may occur. For example, the terminal device 1 may communicate with the network device, or the terminal device 1 may communicate directly with the terminal device 2. A communication link between the terminal device and the network device typically includes an uplink (uplink, UL) and a downlink (downlink, DL). A direct communication link between the terminal devices may be referred to as a sidelink.

The communication system shown in FIG. 1 is applicable to a V2X scenario. When applied to a V2X scenario, the terminal device in FIG. 1 may be a vehicle, or an onboard device, a pedestrian handheld device, a roadside device, or the like. At present, both LTE V2X and NR V2X can realize communication between vehicles and surrounding people, vehicles, roadside facilities, etc.

Both the LTE V2X and the NR V2X support an autonomous selection resource mode in the sidelink. In an autonomous selection resource mode, a resource pool can be configured for a terminal device in advance, the terminal device performs resource perception and exclusion in the resource pool, excludes unavailable resources, and autonomously selects resources for transmitting data from the remaining available resources.

In the related art, when a terminal device performs resource perception and exclusion, only the reserved resources of other terminal devices with the same network standard are perceived and excluded. For example, when an NR terminal device performs resource perception and exclusion, reserved resources of only other NR terminal devices are perceived and excluded; and when an LTE terminal device performs resource perception and exclusion, the reserved resources of only other LTE terminal devices are perceived and excluded.

For ease of understanding, the NR terminal equipment is taken as an example below, a process for a terminal device to perform autonomous resource selection will be described in detail with reference to FIG. 2. As shown in FIG. 2:
a moment n is a moment for triggering the terminal device to perform resource selection, (n-T₀, n-T_{proc,0}) is a resource perception window, and (n+T₁, n+T₂) is a resource selection window. The terminal device can perform resource perception on resources occupied by other terminal devices in a resource perception window. At the moment n, when the terminal device performs resource selection, according to a perception result in the resource perception window, reserved resources of other terminal devices are excluded from resources in the resource selection window to obtain an available resource set, and target resources are determined for transmitting data in the available resource set.

Specifically, the process for the terminal device to perform resource exclusion mainly includes the following two steps.
(1) Since the terminal device cannot perform resource perception in the time slot for resource transmission/reception, the terminal device which is performing resource perception needs to exclude, from the available resource set, the resources corresponding to the time slot in which the terminal device itself cannot perform resource perception.

Specifically, the terminal device which is performing resource perception performs deduction according to all possible resource reservation periods configured by the resource pool, and excludes, from the available resource set, all reserved resources that fall in the time slot where the resource selection window is located.

Illustratively, as shown in FIG. 2, a shaded portion within a resource perception window is a resource corresponding to a time slot in which a terminal device which is performing resource perception cannot perform resource perception, where the terminal device performs resource transmission/reception in the time slot. The two shaded portions within the resource selection window are resources that need to be excluded that derived by the terminal device through the resource reservation period configured by the resource pool.

It should be understood that only the corresponding reserved resources derived by two resource reservation periods are shown in FIG. 2. However, in the actual application process, the corresponding reserved resources need to be calculated according to all possible resource reservation periods configured by the resource pool, and all the reserved resources are excluded from the available resource set.

(2) A terminal device which is performing resource perception excludes resources in the resource pool that are reserved by other terminal devices. Specifically, the terminal device which is performing resource perception decodes sidelink control information (sidelink control information, SCI) of other terminal devices (for example, UE1, UE2 and UE3) within a resource perception window, to obtain resource indication information and resource reservation information of a corresponding terminal device therefrom, and performs reference signal receiving power (reference signal receiving power, RSRP) measurement; and if the RSRP of resources occupied by other terminal devices is higher than a threshold, corresponding reserved resources are excluded.

Illustratively, referring to FIG. 2, a terminal device which is performing resource perception measures that the RSRP of UE1 is above a threshold and that the RSRPs of UE2 and UE3 are below a threshold. Therefore, the terminal device which is performing resource perception excludes the reserved resources of UE1 from the available resource set, and preserves the reserved resources of UE2 and UE3.

It should be understood that in the example shown in FIG. 2, the terminal device which is performing resource perception is an NR terminal device, and UE1, UE2, and UE3 are also NR terminal devices.

In the above related art, when a terminal device performs resource perception and exclusion, only the reserved resources of other terminal devices in the same network standard are perceived and excluded. Therefore, in order to avoid resource collision between an LTE terminal device and an NR terminal device, resource pools need to be configured separately for the LTE terminal device and the NR terminal device, and there is no overlap between the resource pools of the two. In this way, resulting in low utilization rate of the resource pool.

However, in the embodiment of the present application, when performing resource perception and exclusion, a terminal device can not only perceive and exclude reserved resources of other terminal devices in the same network standard, but also perceive and exclude reserved resources of other terminal devices in different network standards. In this way, terminal devices in different network standards may share one resource pool, or there may be an overlap of resource pools of them. For example, the LTE terminal device and the NR terminal device may share one resource pool, or the LTE terminal device and the NR terminal device may each configure different resource pools, but the resource pools overlap in the frequency domain. In this way, the resources in the resource pools can be fully utilized to improve resource utilization rate.

Hereinafter, the technical solutions shown in the present application will be described by specific embodiments. It should be noted that the following embodiments may exist independently or in combination with each other, for the same or similar contents, the description thereof will not be repeated in different embodiments.

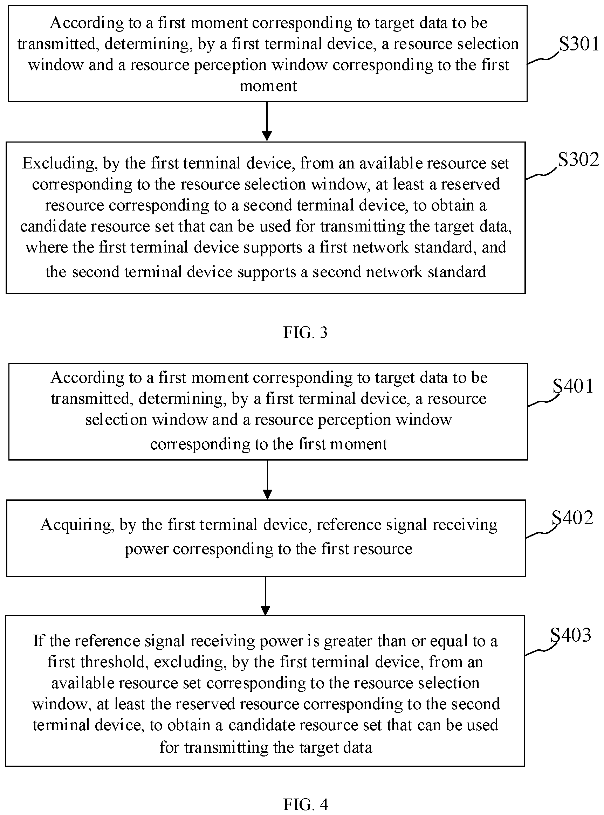

FIG. 3 is a flowchart of a resource selection method according to an embodiment of the present application. Referring to FIG. 3, the method can include the following.

S301, according to a first moment corresponding to target data to be transmitted, determining, by a first terminal device, a resource selection window and a resource perception window corresponding to the first moment, where the resource perception window is located before the resource selection window.

The first terminal device is a terminal device supporting a first network standard, for example, the first network standard may be NR. That is, the first terminal device may be an NR V2X terminal device.

The first moment refers to the moment when the first terminal device is triggered to perform resource selection/re-selection. In some examples, the arrival of a new data packet (i.e., target data) triggers the first terminal device to perform a resource selection for the target data, and the selected resource will be used to transmit the target data. In other examples, after the first terminal device selects a resource for the target data, a resource re-selection may also be triggered according to certain resource re-selection conditions.

In this embodiment, a resource perception window refers to a window where a first terminal device performs resource perception, and the resource perception window corresponds to a period of time in a time domain in a resource pool. The first terminal device can perceive resources occupied by other terminal devices in a resource perception window. A resource selection window refers to a window for the first terminal device to perform a resource selection, and the resource selection window corresponds to a time period in a time domain in a resource pool. The first terminal device selects an available resource for transmitting data in the resource selection window. By way of example in conjunction with FIG. 2, assuming that the first moment is n, the resource perception window may be (n-T₀, n-T_{proc, 0}) and the resource selection window may be (n+T₁, n+T₂). The parameters such as T₀, T_{proc, 0}, T₁, and T₂ can be pre-configured to the first terminal device by the network device, or the parameters such as T₀, T_{proc, 0}, T₁, and T₂ can also be determined autonomously by the first terminal device.

It can be understood that after the first terminal device needs to sense the resources in the resource pool, an appropriate resource can be selected for data transmission according to the resource perception result. Thus, the resource perception window is located before the resource selection window. Illustratively, the resource perception window is located before the first moment and the resource selection window is located after the first moment.

S302, excluding, by the first terminal device, from an available resource set corresponding to the resource selection window, at least a reserved resource corresponding to a second terminal device, to obtain a candidate resource set that can be used for transmitting the target data, where the second terminal device transmits first data on a first resource in the resource perception window, the first terminal device supports a first network standard, and the second terminal device supports a second network standard.

In this embodiment, the first terminal device can perceive the resources occupied by other terminal devices within the resource perception window, and predict the reserved resources of other terminal devices. In this way, when a first terminal device makes a resource selection at a first moment, a candidate resource set which can be used for transmitting target data can be obtained by excluding reserved resources of other terminal devices from the available resource set corresponding to the resource selection window. Note that the other terminal devices above may include terminal devices in the same network standard and terminal devices in different network standards. That is, the first terminal device excludes not only the reserved resources of the terminal devices in the same network standard but also the reserved resources of the terminal devices in different network standards.

For example, it is assumed that the first terminal device is an NR terminal device and the second terminal device is an LTE terminal device. The NR terminal device perceives resources occupied by other NR terminal devices and LTE terminal devices in a resource perception window, and predicts reserved resources of the other NR terminal devices and the LTE terminal devices. In this way, when a first terminal device performs a resource selection at a first moment, the reserved resources of the other NR terminal devices and LTE terminal devices can be excluded from the available resource set corresponding to the resource selection window to obtain a candidate resource set which can be used for transmitting target data.

It should be noted that the process of excluding the reserved resources of other terminal devices in the same network standard by the first terminal device can be referred to the above description of the related art and will not be repeated here. This embodiment focuses on a process in which the first terminal device excludes reserved resources of other terminal devices in different network standards.

In this embodiment, the second terminal device is a terminal device supporting a second network standard, for example, the second network standard may be LTE. That is, the second terminal device may be an LTE V2X terminal device. If the first terminal device senses that the second terminal device occupies the first resource and transmits the first data in the resource perception window, the reserved resource of the second terminal device is excluded in the resource selection window.

The first data refers to data transmitted by the second terminal device within the resource perception window.

The first resource refers to a resource occupied by the second terminal device when transmitting first data in a resource perception window.

In this embodiment, the first terminal device can exclude the reserved resources of the second terminal device in the available resource set by the following: the first terminal device acquires sidelink control information corresponding to the first data, where the sidelink control information includes: resource indication information and reservation period information. The resource indication information is used for indicating a resource occupied by the first data transmission. The reservation period information is used for indicating a reservation period of a resource occupied by the first data transmission. The first terminal device determines a reserved resource corresponding to a second terminal device in a resource selection window according to the resource indication information and the reservation period information. The first terminal device excludes, from an available resource set corresponding to the resource selection window, a reserved resource corresponding to the second terminal device.

It should be understood that, in S302 of this embodiment, the excluding at least a reserved resource corresponding to a second terminal device means that other resource excluding processes may be included in addition to the reserved resources corresponding to the second terminal device, and this embodiment the other resource excluding processes are not limited in this embodiment. For example, in practical application, in addition to excluding the reserved resources of the LTE V2X terminal device, the NR V2X terminal device also needs to exclude the reserved resources of the other NR V2X terminal devices.

In the resource selection method provided in the above-mentioned embodiment shown in FIG. 3, the first terminal device determines a resource selection window and a resource perception window corresponding to a first moment according to the first moment corresponding to target data to be transmitted. The first terminal device excludes, from an available resource set corresponding to the resource selection window, at least the reserved resource corresponding to the second terminal device, to obtain a candidate resource set that can be used for transmitting the target data, where the first terminal device supports a first network standard, and the second terminal device supports a second network standard. In the above-mentioned process, since the first terminal device can exclude the reserved resources of the second terminal device in a network standard which is different from the network standard thereof, the first terminal device and the second terminal device share one resource pool, or the resource pool of the second terminal device overlaps with the resource pool of the first terminal device in the frequency domain, so that the resource pool can be fully utilized, thereby improving the resource utilization rate.

On the basis of the above-mentioned embodiments, the resource selection method shown in the present application will be described in further detail with reference to FIG. 4.

FIG. 4 is a flowchart of another resource selection method according to an embodiment of the present application. Referring to FIG. 4, the method can include:

S401, according to a first moment corresponding to target data to be transmitted, determining, by a first terminal device, a resource selection window and a resource perception window corresponding to the first moment, where the resource perception window is located before the resource selection window.

It should be noted that the execution process of S401 can be referred to the execution process of S301, and will not be described in detail here.

S402, acquiring, by the first terminal device, reference signal receiving power corresponding to the first resource.

The first resource refers to a resource occupied by the second terminal device when transmitting first data in a resource perception window. Illustratively, the first resource may be a resource corresponding to a physical sidelink shared channel (physical sidelink shared channel, PSSCH).

The reference signal receiving power (reference signal receiving power, RSRP) is used to indicate the strength of the radio signal of the channel. When the second terminal device transmits the first data via the PSSCH, the first terminal device can measure a reference signal receiving power of the PSSCH as a reference signal receiving power of the first resource, and can measure a reference signal receiving power of the PSCCH corresponding to the PSSCH as a reference signal receiving power of the first resource. That is, in this embodiment, the reference signal receiving power corresponding to the first resource may be the RSRP of the PSCCH or the RSRP of the PSSCH.

S403, if the reference signal receiving power is greater than or equal to a first threshold, excluding, by the first terminal device, from an available resource set corresponding to the resource selection window, at least the reserved resource corresponding to the second terminal device, to obtain a candidate resource set that can be used for transmitting the target data.

It should be noted that the implementation in S302 is also applicable to the S403 in this embodiment, and the similarities will not be repeated.

In addition, the first threshold may be a pre-set threshold configured by the network device to the first terminal device, or the first threshold may be determined by priorities of the first terminal device and the second terminal device.

When the first threshold is determined by the priorities of the first terminal device and the second terminal device, the network device configures a reference signal receiving power list to the first terminal, so as to facilitate the first terminal device to query a size of the first threshold, for example:
the first terminal device acquires the transmission priority of the second terminal device through the sidelink control information. The first terminal device determines the threshold index i of the reference signal receiving power according to the transmission priorities of the first terminal device itself and the second terminal device. The first terminal device queries the reference signal receiving power list for the first threshold according to the threshold index i.

For example, the contents of the reference signal receiving power list may be as shown in Table 1.

**Table 1**

| i | 0 | 1 | 2 | ... | n | 66 |
|---|---|---|---|---|---|---|
| First threshold (dBm) | -∞ | -128 | -126 | ... | -128+(n-1)*2 | +∞ |

In an possible approach, the first terminal device may determine the threshold index i by:
assuming that the transmission priority of the second terminal device is a and the transmission priority of the first terminal device is b, the threshold index i = a + (b-1) * 8.

Illustratively, assuming a transmission priority b = 3 for the first terminal device and a transmission priority a = 4 for the second terminal device, the threshold index i = a + (b-1) * 8 = 4 + (3-1) * 8 = 20. From the threshold index i = 20, it can be known in the reference signal receiving power list that the first threshold =-128 + (20-1) * 2 =-90.

Assuming that the measured reference signal receiving power corresponding to the first resource is greater than or equal to -90, the first terminal device excludes the reserved resource corresponding to the second terminal device from the available resource set corresponding to the resource selection window. Assuming that the measured reference signal receiving power corresponding to the first resource is less than -90, the reserved resource corresponding to the second terminal device is not excluded, i.e., the reserved resource corresponding to the second terminal device is an available resource.

In another possible approach, the first terminal device may determine the threshold index i by:
assuming that the transmission priority of the second terminal device is a and the transmission priority of the first terminal device is b, the threshold index i = a *8+b+1.

Illustratively, assuming a transmission priority b = 3 for the first terminal device and a transmission priority a = 4 for the second terminal device, the threshold index i = a * 8 + b + 1 = 4 * 8 + 3 + 1 = 36. From the threshold index i = 36, it can be known in the reference signal receiving power list that the first threshold =-128 + (36-1) * 2 =-58.

Assuming that the measured reference signal receiving power corresponding to the first resource is greater than or equal to -58, the first terminal device excludes the reserved resource corresponding to the second terminal device from the available resource set corresponding to the resource selection window. Assuming that the measured reference signal receiving power corresponding to the first resource is less than -58, the reserved resource corresponding to the second terminal device is not excluded, i.e., the reserved resource corresponding to the second terminal device is an available resource.

In the resource selection method provided by the above-mentioned embodiment shown in FIG. 4, a first terminal device determines a reserved resource of a second terminal device, and at the same time measures reference signal receiving power corresponding to the first resource. If the reference signal receiving power is greater than or equal to a first threshold, then a reserved resource corresponding to a second terminal device is at least excluded from an available resource set corresponding to the resource selection window, to obtain a candidate resource set that can be used for transmitting the target data. If the reference signal receiving power is less than the first threshold, the reserved resource corresponding to the second terminal device is an available resource. By reasonably excluding and selecting the resources in the resource pool, the result of resource selection is more accurate.

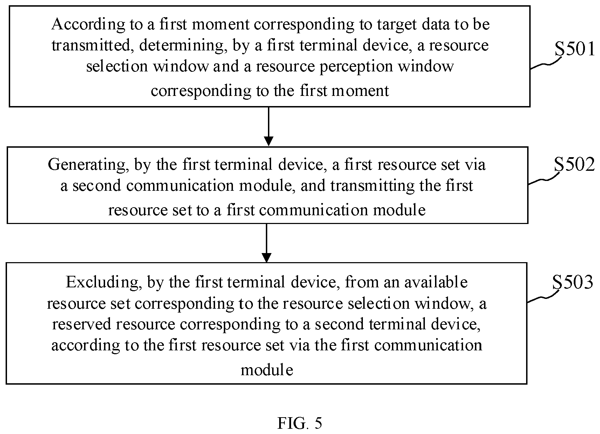

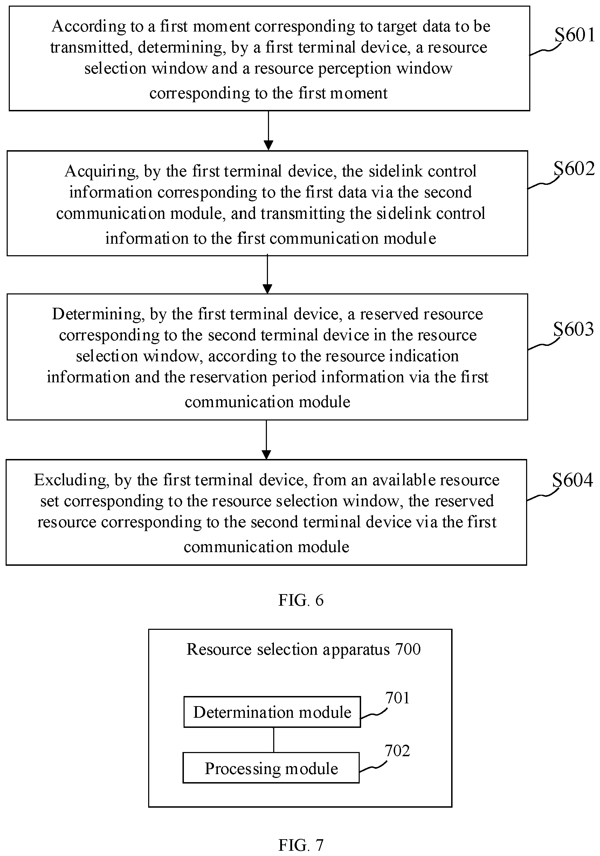

In the embodiments provided in the present application, only an NR V2X module may be provided in the first terminal device, or both the NR V2X module and the LTE V2X module may be provided. Next, a resource selection method of the first terminal device provided with both the NR V2X module and the LTE V2X module will be described by the embodiments of FIGS. 5 and 6.

FIG. 5 is a flowchart of yet another resource selection method according to an embodiment of the present application. Referring to FIG. 5, the method can include the following.

S501, according to a first moment corresponding to target data to be transmitted, determining, by a first terminal device, a resource selection window and a resource perception window corresponding to the first moment, where the resource perception window is located before the resource selection window.

It should be noted that the execution process of S501 can be referred to the execution process of S301, and will not be repeated here.

S502, generating, by the first terminal device, a first resource set via a second communication module, and transmitting the first resource set to a first communication module.

The first communication module is a communication module supporting a first network standard, for example, the first communication module may be an NR V2X communication module.

The second communication module is a communication module supporting a second network standard, for example, the second communication module can be an LTE V2X communication module.

In this embodiment, the first communication module and the second communication module are both provided in the first terminal device.

The first resource set is used for indicating resources available for the first communication module in the resource selection window, or indicating resources unavailable for the first communication module in the resource selection window.

When the first resource set is used to indicate resources available to the first communication module in the resource selection window, the first resource set may be also referred to as an idle resource set. The first resource set may be a resource set recommended/suitable for use by the first communication module generated by the second communication module through a resource perception process.

When the first resource set is used to indicate resources unavailable to the first communication module in the resource selection window, the first resource set may also be referred to as a non-idle resource set. The first resource set may be a resource set not recommended/unsuitable for use by the first communication module generated by the second communication module through a resource perception process.

For example, the first resource set includes idle resources (i.e., resources which are available for the first communication module) except the reserved resources corresponding to the second terminal device in the resource selection window, or reserved resources (i.e., resources which are unavailable for the first communication module) corresponding to the second terminal device in the resource selection window.

It should be understood that the resources which are unavailable for the first communication module in the resource selection window include reserved resources of other communication modules and/or reserved resources of other terminal devices, etc. When the first resource set is used for indicating a resource which is unavailable for the first communication module in the resource selection window, the first resource set includes a set of reserved resources of other communication modules and/or reserved resources of other terminal devices, etc., i.e., the first resource set is a non-idle resource set.

Accordingly, the resource available for the first communication module in the resource selection window refers to an idle resource excluding the above-mentioned resource unavailable for the first communication module from the resource selection window. When the first resource set is used to indicate resources available to the first communication module in the resource selection window, the first resource set is also referred to as an idle resource set.

In this embodiment, a first resource set is generated by a second communication module. A second communication module generates a first resource set after a resource perception window performs resource perception on resources in a resource pool.

For example, an LTE V2X communication module (a second communication module) in a first terminal device can perceive reserved resources of other LTE V2X communication modules/devices in a resource perception window, generate a first resource set according to a resource perception result, and transmit the first resource set to an NR V2X communication module (a first communication module), so that the NR V2X communication module excludes the reserved resources of the LTE V2X communication module/devices.

Alternatively, before the LTE V2X communication module performs resource perception, the NR V2X communication module may transmit auxiliary information to the LTE V2X communication module, so as to improve the accuracy of the resource perception result of the LTE V2X communication module.

Illustratively, the auxiliary information may include one or more of a priority of the first terminal device, a resource reservation period corresponding to the target data, a location of a resource selection window, and a resource size corresponding to the target data.

After the second communication module generates the first resource set, the first resource set is transmitted to the first communication module via an inter-module interface, so as to facilitate the first communication module to perform resource exclusion or selection.

S503, excluding, by the first terminal device, from an available resource set corresponding to the resource selection window, a reserved resource corresponding to a second terminal device, according to the first resource set via the first communication module.

In one embodiment, when the first resource set is used to indicate resources available to the first communication module in the resource selection window. The first terminal device determines a resource set to be excluded according to the available resource set and the first resource set. The resources in the resource set to be excluded belong to the available resource set and do not belong to the first resource set. The first terminal device excludes resources in the resource set to be excluded from the available resource set. At this time, the resource set to be excluded refers to a portion where the available resource set does not intersect with the first resource set.

In another embodiment, when the first resource set is used to indicate resources that are unavailable for the first communication module in the resource selection window. The first terminal device determines a resource set to be excluded according to the available resource set and the first resource set. The resources in the resource set to be excluded belong to the available resource set and belong to the first resource set. The first terminal device excludes, from the available resource set, resources in the resource set to be excluded. At this time, the resource set to be excluded refers to a portion where the available resource set intersects with the first resource set.

In the resource selection method provided by the above-mentioned embodiment shown in FIG. 5, an NR V2X communication module and an LTE V2X communication module are simultaneously installed on a first terminal device. The LTE V2X communication module can perceive reserved resources of other LTE V2X communication modules/devices in a resource pool, generate a first resource set according to a resource perception result, and transmit the first resource set to the NR V2X communication module, so as to facilitate the NR V2X communication module to perform resource exclusion. In this way, the NR V2X communication module/device and the LTE V2X communication module/device can share frequency domain resources, thereby improving resource utilization rate.

FIG. 6 is a flowchart of yet still another resource selection method according to an embodiment of the present application. Referring to FIG. 6, the method can include the following.

S601, according to a first moment corresponding to target data to be transmitted, determining, by a first terminal device, a resource selection window and a resource perception window corresponding to the first moment, where the resource perception window is located before the resource selection window.

It should be noted that the execution process of S601 can be referred to the execution process of S301, and will not be repeated here.

S602, acquiring, by the first terminal device, the sidelink control information corresponding to the first data via the second communication module, and transmitting the sidelink control information to the first communication module.

Note that the embodiment of the sidelink control information corresponding to the first data in S302 is also applicable to S602 in this embodiment; the embodiments of the first communication module and the second communication module in S502 also apply to S602 in this embodiment; and the similarities will not be repeated. In addition:

In addition, in this embodiment, the second communication module acquires sidelink control information corresponding to the first data and transmits same to the first communication module, so as to facilitate the first communication module to perform resource exclusion.

For example, an LTE V2X communication module (a second communication module) in a first terminal device acquires resource indication information, reservation period information, etc. (sidelink control information) corresponding to first data, and transmits an acquired result to an NR V2X communication module (a first communication module), so that the NR V2X communication module excludes reserved resources of the LTE V2X communication device/module.

Alternatively, the LTE V2X communication module may also acquire the measurement result of the RSRP, and transmit the measurement result of the RSRP to the NR V2X communication module, thereby helping the NR V2X communication module to perform resource exclusion. The resource excluding process can be referred to S403, and will not be repeated here.

Alternatively, before performing resource perception, the NR V2X communication module may transmit auxiliary information to the LTE V2X communication module, so as to improve the accuracy of the perception result of the LTE V2X communication module.

Illustratively, the auxiliary information may include one or more of a priority of the first terminal device, a resource reservation period corresponding to the target data, a location of a resource selection window, and a resource size corresponding to the target data.

After acquiring the sidelink control information corresponding to the first data, the second communication module transmits the above-mentioned sidelink control information to the first communication module via an inter-module interface, so as to facilitate the first communication module to perform resource exclusion.

S603, determining, by the first terminal device, a reserved resource corresponding to the second terminal device in the resource selection window, according to the resource indication information and the reservation period information via the first communication module.

After receiving the resource indication information and the reservation period information from the second communication module, the first communication module can determine, by calculating the reservation period, the reserved resource corresponding to the second terminal device in the resource selection window.

S604, excluding, by the first terminal device, from an available resource set corresponding to the resource selection window, the reserved resource corresponding to the second terminal device via the first communication module.

After determining the reserved resource corresponding to the second terminal device, the first communication module may exclude the reserved resource corresponding to the second terminal device from the available resource set. It will be appreciated that the resource excluding process may be referred to the detailed description of the foregoing embodiments and will not be repeated here.

In the resource selection method provided by the above-mentioned embodiment shown in FIG. 6, an NR V2X communication module and an LTE V2X communication module are simultaneously installed on the first terminal device. The LTE V2X communication module can acquire sidelink control information of other LTE V2X communication devices, and transmit the acquired sidelink control information to the NR V2X communication module, so that the NR V2X communication module determines and excludes reserved resources of the LTE V2X communication devices in the resource pool. In this way, the NR V2X communication module/device and the LTE V2X communication module/device can share frequency domain resources, thereby improving resource utilization rate.

FIG. 7 is a schematic structural diagram of a resource selection apparatus according to an embodiment of the present application; and The resource selection apparatus of this embodiment can be a first terminal device, or an apparatus provided in the first terminal device, for example, can be a module, an unit, a chip, a chip module, etc. in the first terminal device. With reference to FIG. 7, a resource selection apparatus 700 is applied to a first terminal device, and the resource selection apparatus 700 includes: a determination module 701 and a processing module 702, where,
the determination module 701 is configured to determine, according to a first moment corresponding to target data to be transmitted, a resource selection window and a resource perception window corresponding to the first moment, the resource perception window being located before the resource selection window; and
the processing module 702 is configured to exclude, from an available resource set corresponding to the resource selection window, at least a reserved resource corresponding to a second terminal device, so as to obtain a candidate resource set that can be used for transmitting the target data, where the second terminal device transmits first data on a first resource in the resource perception window, the first terminal device supports a first network standard, and the second terminal device supports a second network standard.

In a possible implementation, the processing module 702 is specifically configured to:
acquire sidelink control information corresponding to the first data, where the sidelink control information includes: resource indication information and reservation period information; where the resource indication information is used for indicating a resource occupied by a first data transmission, and the reservation period information is used for indicating a reservation period of the resource occupied by the first data transmission;
determine the reserved resource corresponding to the second terminal device in the resource selection window according to the resource indication information and the reservation period information; and
exclude, from the available resource set corresponding to the resource selection window, the reserved resource corresponding to the second terminal device.

In a possible implementation, the processing module 702 is specifically configured to:
acquire reference signal receiving power corresponding to the first resource; and
if the reference signal receiving power is greater than or equal to a first threshold, excluding, by the first terminal device, from an available resource set corresponding to the resource selection window, the reserved resource corresponding to the second terminal device.

In a possible implementation, the sidelink control information further includes: a priority of the second terminal device; and
the first threshold is related to a priority of the first terminal device and the priority of the second terminal device.

In a possible implementation, the first threshold is a pre-set threshold configured by a network device to the first terminal device.

In a possible implementation, the first terminal device includes a first communication module and a second communication module, and the first communication module supports the first network standard and the second communication module supports the second network standard.

In a possible implementation, the processing module 702 is specifically configured to:
generate a first resource set via the second communication module, where the first resource set is used for indicating resources available for the first communication module in the resource selection window, or indicating resources unavailable for the first communication module in the resource selection window;
transmit the first resource set to the first communication module via the second communication module; and
exclude, from the available resource set corresponding to the resource selection window, the reserved resource corresponding to the second terminal device, according to the first resource set via the first communication module.

In a possible implementation, the first resource set is used to indicate the resources available for the first communication module in the resource selection window; and the processing module 702 is specifically configured to:
determine a resource set to be excluded according to the available resource set and the first resource set, where a resource in the resource set to be excluded belongs to the available resource set and does not belong to the first resource set; and
exclude resources in the resource set to be excluded from the available resource set.

In a possible implementation, the first resource set is used for indicating resources unavailable for the first communication module in the resource selection window; and the processing module 702 is specifically configured to:
determine a resource set to be excluded according to the available resource set and the first resource set, where a resource in the resource set to be excluded belongs to the available resource set and the first resource set; and
exclude resources in the resource set to be excluded from the available resource set.

In a possible implementation, the first resource set includes: a reserved resource corresponding to the second terminal device in the resource selection window, or an idle resource other than the reserved resource corresponding to the second terminal device in the resource selection window.

In a possible implementation, the processing module 702 is specifically configured to:
acquire sidelink control information corresponding to the first data via the second communication module, and the sidelink control information includes: resource indication information and reservation period information; where the resource indication information is used for indicating a resource occupied by a first data transmission, and the reservation period information is used for indicating a reservation period of the resource occupied by the first data transmission;
transmit the sidelink control information to the first communication module via the second communication module;
determine a reserved resource corresponding to the second terminal device in the resource selection window, according to the resource indication information and the reservation period information via the first communication module; and
exclude, from an available resource set corresponding to the resource selection window, the reserved resource corresponding to the second terminal device via the first communication module.

In a possible implementation, the processing module 702 is specifically configured to:
transmit auxiliary information to the second communication module via the first communication module; where the auxiliary information includes one or more of: a priority of the first terminal device, a resource reservation period corresponding to the target data, a position of the resource selection window, and a resource size corresponding to the target data.

In a possible implementation, the first network standard is a new radio (NR), and the second network standard is long term evolution (LTE).

The resource selection apparatus provided by the embodiment of the present application can execute the technical solutions shown by the above-mentioned method embodiments, and the implementation principles and advantageous effects thereof are similar, and will not be repeated herein.

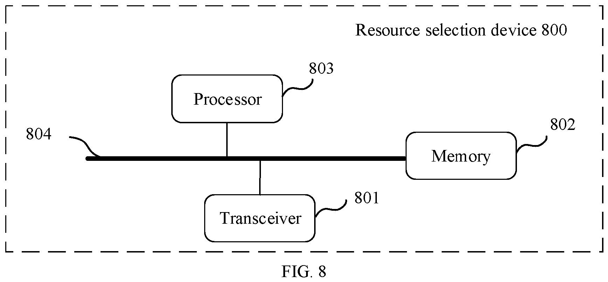

FIG. 8 is a schematic structural diagram of a resource selection device according to an embodiment of the present application. The resource selection device may be a terminal device, or a chip, a chip module, etc. provided in the terminal device. As shown in FIG. 8, the resource selection device 800 provided by this embodiment includes: a transceiver 801, a memory 802, and a processor 803.

The transceiver 801 may include: a transmitter and/or a receiver. The transmitter may also be referred to as a sender, a sending set, a sending port or a sending interface and the like, and the receiver may also be referred to as a receiver, a receiving set, a receiving port or a receiving interface and the like. Illustratively, the transceiver 801, the memory 802, and the processor 803 are interconnected via bus 804.

The memory 802 is used for storing a computer program.

The processor 803 is used for executing the computer program stored in the memory to implement the resource selection method in any of the method embodiments described above.

A receiver in the transceiver 801 may be used to perform a receiving function of the resource selection device in the method embodiments described above. A transmitter in the transceiver 801 may be used to perform a transmitting function of the resource selection device in the method embodiments described above. The processor 803 may be used to perform a processing function of the resource selection device in the method embodiments described above.

The resource selection device provided in this embodiment can be used to execute the resource selection method in any one of the above-mentioned method embodiments, and the implementation principles and technical effects thereof are similar and will not be repeated herein.

An embodiment of the present application also provides a computer-readable storage medium storing a computer program which, when executed by a computer, implements the resource selection method in any one of the above method embodiments, and the implementation principles and technical effects thereof are similar and will not be repeated herein.

An embodiment of the present application also provide a chip including: a memory, a processor and hardware system resources, where a computer program is stored in the memory, and the processor runs the computer program to implement the resource selection method as any one of the above method embodiments, and the implementation principles and technical effects thereof are similar and will not be repeated herein.

An embodiment of the present application also provides a computer program product including a computer program which, when executed by a computer, implements the resource selection method as in any of the above method embodiments, and the implementation principles and technical effects thereof are similar and will not be repeated herein.

In the several embodiments provided in the present application, it should be understood that the disclosed devices and methods may be implemented in other ways. For example, the device embodiments described above are merely illustrative, e.g., the partitioning of the modules is merely a logical function partitioning, and actual implementations may have additional partitioning, e.g., multiple modules may be combined or integrated into another system, or some features may be omitted, or not performed. In another aspect, the couplings or direct couplings or communication connections shown or discussed with respect to each other may be indirect couplings or communication connections through some interfaces, apparatuses, or modules, and may be electrical, mechanical, or other forms.

The modules described as separate components may or may not be physically separated, the components shown as modules may or may not be physical units, i.e., may be located in one place, or may be distributed in plurality of network units. Some or all of the modules may be selected according to actual needs to achieve the purpose of the solution of this embodiment.

In addition, each functional module in each embodiment of the present application may be integrated in one processing unit, or may physically exist separately, or two or more modules may be integrated in one unit. The units constructed by the above-mentioned modules can be implemented in the form of hardware or in the form of hardware plus software functional units.

The integrated modules, implemented in the form of software functional modules, may be stored in a computer-readable storage medium. The software functional modules are stored in a storage medium including instructions to cause a computer device (which may be a personal computer, a server, or a network device, etc.) or a processor to perform some of the steps of the methods described in various embodiments of the present application.

It will be appreciated that the processor may be a central processing unit (central processing unit, CPU), other general purpose processors, a digital signal processor (Digital Signal Processor, DSP), an application specific integrated circuit (Application Specific Integrated Circuit, ASIC), etc. A general purpose processor may be a microprocessor, or the processor may be any conventional processor. The steps of the method disclosed in connection with the present application may be embodied directly in a hardware processor for execution, or in a combination of hardware and software modules within the processor for execution.

The memory may include high-speed RAM memory, but may also include non-volatile storage NVM, such as at least one magnetic disk memory, such as a U-disk, a removable hard disk, a read-only memory, a magnetic or an optical disk, etc.

The bus may be an industry standard architecture (Industry Standard Architecture, ISA) bus, a peripheral component (peripheral component, PCI) bus, or an extended industry standard architecture (Extended Industry Standard Architecture, EISA) bus, etc. The bus may be divided into an address bus, a data bus, a control bus, etc. For ease of illustration, a bus in the figures of the present application is not limited to only one bus or one type of bus.

The storage medium may be implemented by any type of volatile or nonvolatile storage device or combinations thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optical disk. The storage medium may be any available medium that can be accessed by a general purpose computer or a special purpose computer.

An exemplary storage medium is coupled to the processor, such that the processor can read information from, and write information to, the storage medium. In the alternative, the storage medium may be a part of the processor. The processor and the storage medium may be provided in an application specific integrated circuit (Application Specific Integrated Circuit, ASIC). Of course, the processor and the storage medium may be provided as discrete components in an electronic device or a main control device.

Those of ordinary skill in the art will appreciate that all or some of the steps to implement the method embodiments described above may be performed by hardware associated with program instructions. The program may be stored in a computer-readable storage medium. The program, when executed, performs steps including the various method embodiments described above; and the storage medium includes: various media can store program codes, such as a ROM, a RAM, a magnetic disk or an optical disk.

Finally, it should be noted that: the above embodiments are only used to illustrate the technical solution of the present invention, and not to limit same; while the present invention has been described in detail with reference to the foregoing embodiments, it will be understood by those of ordinary skill in the art that: the technical solutions described in the foregoing embodiments may still be modified, or some or all of the technical features may be equivalently substituted; and these modifications or substitutions do not make the essence of the corresponding technical solution depart from the scope of the technical solutions of the embodiments of the present invention.

## Claims

1. A resource selection method, comprising:
according to a first moment corresponding to target data to be transmitted, determining, by a first terminal device, a resource selection window and a resource perception window corresponding to the first moment, the resource perception window being located before the resource selection window;
excluding, by the first terminal device, from an available resource set corresponding to the resource selection window, at least a reserved resource corresponding to a second terminal device, to obtain a candidate resource set that can be used for transmitting the target data, wherein the second terminal device transmits first data on a first resource in the resource perception window, the first terminal device supports a first network standard, and the second terminal device supports a second network standard.

2. The method according to claim 1, wherein the excluding, by the first terminal device, from the available resource set corresponding to the resource selection window, the reserved resource corresponding to the second terminal device comprises:
acquiring, by the first terminal device, sidelink control information corresponding to the first data, the sidelink control information comprising: resource indication information and reservation period information; wherein the resource indication information is used for indicating a resource occupied by a first data transmission, and the reservation period information is used for indicating a reservation period of the resource occupied by the first data transmission;
determining, by the first terminal device, the reserved resource corresponding to the second terminal device in the resource selection window according to the resource indication information and the reservation period information;
excluding, by the first terminal device, from the available resource set corresponding to the resource selection window, the reserved resource corresponding to the second terminal device.

3. The method according to claim 2, wherein the excluding, by the first terminal device, from the available resource set corresponding to the resource selection window, the reserved resource corresponding to the second terminal device comprises:
acquiring, by the first terminal device, reference signal receiving power corresponding to the first resource;
based on that the reference signal receiving power is greater than or equal to a first threshold, excluding, by the first terminal device, from an available resource set corresponding to the resource selection window, the reserved resource corresponding to the second terminal device.

4. The method according to claim 3, wherein the sidelink control information further comprises: a priority of the second terminal device;
the first threshold is related to a priority of the first terminal device and the priority of the second terminal device.

5. The method according to claim 3, wherein the first threshold is a pre-set threshold configured by a network device to the first terminal device.

6. The method according to any one of claims 1 to 5, wherein the first terminal device comprises a first communication module and a second communication module, and the first communication module supports the first network standard and the second communication module supports the second network standard.

7. The method according to claim 6, wherein the excluding, by the first terminal device, from the available resource set corresponding to the resource selection window, the reserved resource corresponding to the second terminal device comprises:
generating, by the first terminal device, a first resource set via the second communication module, wherein the first resource set is used for indicating resources available for the first communication module in the resource selection window, or indicating resources unavailable for the first communication module in the resource selection window;
transmitting, by the first terminal device, the first resource set to the first communication module via the second communication module;
excluding, by the first terminal device, from the available resource set corresponding to the resource selection window, the reserved resource corresponding to the second terminal device, according to the first resource set via the first communication module.

8. The method according to claim 7, wherein the first resource set is used for indicating the resources available for the first communication module in the resource selection window; and the excluding, by the first terminal device, from the available resource set corresponding to the resource selection window, the reserved resource corresponding to the second terminal device, according to the first resource set via the first communication module, comprising:
determining, by the first terminal device, a resource set to be excluded according to the available resource set and the first resource set, wherein a resource in the resource set to be excluded belongs to the available resource set and does not belong to the first resource set;
excluding, by the first terminal device, resources in the resource set to be excluded from the available resource set.

9. The method according to claim 7, wherein the first resource set is used for indicating resources unavailable for the first communication module in the resource selection window; and the excluding, by the first terminal device, from the available resource set corresponding to the resource selection window, the reserved resource corresponding to the second terminal device, according to the first resource set via the first communication module, comprising:
determining, by the first terminal device, a resource set to be excluded according to the available resource set and the first resource set, wherein a resource in the resource set to be excluded belongs to the available resource set and the first resource set;
excluding, by the first terminal device, resources in the resource set to be excluded from the available resource set.

10. The method according to claim 7, wherein the first resource set comprises: a reserved resource corresponding to the second terminal device in the resource selection window, or an idle resource other than the reserved resource corresponding to the second terminal device in the resource selection window.

11. The method according to claim 6, wherein the excluding, by the first terminal device, from the available resource set corresponding to the resource selection window, the reserved resource corresponding to the second terminal device comprises:
acquiring, by the first terminal device, sidelink control information corresponding to the first data via the second communication module, the sidelink control information comprising: resource indication information and reservation period information; wherein the resource indication information is used for indicating a resource occupied by a first data transmission, and the reservation period information is used for indicating a reservation period of the resource occupied by the first data transmission;
transmitting, by the first terminal device, the sidelink control information to the first communication module via the second communication module;
determining, by the first terminal device, a reserved resource corresponding to the second terminal device in the resource selection window, according to the resource indication information and the reservation period information via the first communication module;
excluding, by the first terminal device, from an available resource set corresponding to the resource selection window, the reserved resource corresponding to the second terminal device via the first communication module.

12. The method according to any one of claims 7 to 11, further comprising:
transmitting, by the first terminal device, auxiliary information to the second communication module via the first communication module; wherein the auxiliary information comprises one or more of: a priority of the first terminal device, a resource reservation period corresponding to the target data, a position of the resource selection window, and a resource size corresponding to the target data.

13. The method according to any one of claims 1 to 12, wherein
the first network standard is a new radio (NR),
the second network standard is long term evolution (LTE).

14. A resource selection apparatus, applied to a first terminal device, the apparatus comprising: a determination module and a processing module, wherein
the determination module is configured to determine, according to a first moment corresponding to target data to be transmitted, a resource selection window and a resource perception window corresponding to the first moment, the resource perception window being located before the resource selection window;
the processing module is configured to exclude, from an available resource set corresponding to the resource selection window, at least a reserved resource corresponding to a second terminal device, to obtain a candidate resource set that can be used for transmitting the target data, wherein the second terminal device transmits first data on a first resource in the resource perception window, the first terminal device supports a first network standard, and the second terminal device supports a second network standard.

15. A resource selection device, comprising: a processor and a memory; wherein
the memory stores computer-executed instructions;
the processor executes the computer-executed instructions stored in the memory to cause the processor to perform the resource selection method according to any one of claims 1 to 13.

16. A computer-readable storage medium, storing computer-executable instructions which, when executed by a processor, implement the resource selection method according to any one of claims 1 to 13.

17. A computer program product, comprising a computer program which, when executed by a processor, implements the resource selection method according to any one of claims 1 to 13.
